# EUROPÄISCHE PATENTSCHRIFT

(11) **EP 2 637 036 B1**
(45) Veröffentlichungstag und Bekanntmachung des Hinweises auf die Patenterteilung: **14.05.2014**
(21) Anmeldenummer: 12001541.7
(22) Anmeldetag: 07.03.2012
(51) Int. Cl.: G01N 21/47, G01N 21/59, G01S 7/497

(54) **Vorsatzmodul zum Aufsetzen auf einen optischen Sensor und Verfahren zum Betreiben eines optischen Sensors**
Ancillary module for setting on an optical sensor and method for operating an optical sensor
Module complémentaire destiné au montage sur un capteur optique et procédé de fonctionnement d'un capteur optique

(43) Veröffentlichungstag der Anmeldung: 11.09.2013
(73) Patentinhaber: SICK AG, 79183 Waldkirch/Breisgau (DE)
(72) Erfinder: Wüstefeld, Martin, 79350 Sexau (DE)
(74) Vertreter: Manitz, Finsterwald & Partner GbR

(56) Entgegenhaltungen:
- EP-A1- 0 122 609
- EP-A2- 1 939 650
- US-A1- 2007 131 842
- US-A1- 2009 108 070
- US-A1- 2009 140 047
- US-B1- 7 428 995

## Beschreibung

Die Erfindung betrifft eine Kombination aus einem optischen Sensor und einem Vorsatzmodul zum Aufsetzen auf den optischen Sensor und ein Verfahren zum Betreiben eines optischen Sensors unter Einsatz eines solchen Vorsatzmoduls.

Bekannte optische Sensoren umfassen z.B. eine Sendeeinheit zum Aussenden von Detektionslicht in einen Detektionsbereich, einen Empfänger zum Empfangen von aus dem Detektionsbereich zurückreflektiertem oder zurückremittiertem Licht und eine Auswerteeinheit zum Auswerten des zurückreflektierten oder zurückremittierten Lichts. Dabei kann es sich z.B. um Scannersysteme, wie sie in DE 198 00 968 C2, EP 1 980 871 B1 oder DE 39 08 273 C1 beschrieben sind, oder abstandsmessende Sensoren handeln, die z.B. aus der Lichtdauer, die ein in einen Überwachungsbereich eingestrahltes Lichtsignal nach Reflexion an einem Objekt in dem Überwachungsbereich wieder zurück zum Sensor benötigt, auf die Entfernung schließen können.

Aus der US 2009/140047 A1 ist bereits ein Sensor mit einer Sendeeinheit zum Aussenden von Detektionslicht in einen Detektionsbereich, einem Empfänger zum Empfangen von aus dem Detektionsbereich zurückreflektiertem oder zurückremittiertem Licht und einer Auswerteeinheit zum Auswerten des empfangenen Lichts bekannt. Dabei umfasst die das in den Detektionsbereich ausgesandte Detektionslicht erzeugende Sendeeinheit eine Laserlichtquelle sowie eine Sammellinse. Ein Testlichtempfänger empfängt entweder einen von der Frontseite der Sammellinse oder, im Fall einer zweigeteilten Sammellinse, von der Trennfläche zwischen den beiden Linsenhälften reflektierten Teil des Laserlichts.

Bei einem aus der US 2007/131842 A1 bekannten Scanner wird zur Überwachung der Ausgangsleistung einer Laserdiodenanordnung ein Teil des Laserlichts nach einer Sammellinse und vor einer Scanneroptik abgezweigt und einem Detektor zugeführt. Das nicht abgezweigte Laserlicht trifft auf die Scanneroptik.

Bei einem in der EP 0 122 609 A1 beschriebenen Verfahren zur Steuerung der von einem Wolkenhöhenmessgerät ausgesandten Messenergie wird der Verschmutzungsgrad von Sende- und Empfangsfenstern durch Messung des vom Sendefenster reflektierten Lichts bestimmt. Dabei werden zur Messung des Verschmutzungsgrades Lichtimpulse ausgesandt, die von den der Wolkenhöhenmessung dienenden Lichtimpulsen getrennt sind.

Aus der Druckschrift 8230 OPTICAL POWER METER, Seiten 1 - 6, ADCMT, 2009, ist ein optischer Leistungsmesser mit einem Abnehmer oder einem zylindrischen Anschluss zur Messung der Ausgangsleistung eines Lichtleiters bekannt.

In der Druckschrift Primes Katalog Laserdiagnose, Produkte und Dienstleistungen, Seiten 1 - 59, 2011, ist ein Beam-Monitor zur Strahldiagnostik und zur Messung von Lasern hoher Ausgangsleistung insbesondere für Schneidanwendungen beschrieben, bei dem zur Strahlüberwachung während der Produktion zur punktweisen Abtastung des Laserstrahls ein rotierender Spiegel verwendet wird, der zum Abtasten des gesamten Strahlprofils zusätzlich linear bewegt wird, um jeweils einen Teilstrahl auszublenden und auf den Detektor zu lenken. Dabei erfolgt die Messung vor der Fokussieroptik. Es wird also nicht der für die Bearbeitung bestimmte fokussierte, sondern der unfokussierte Laserstrahl gemessen.

Andere optische Sensoren sind als Lichtschranke oder Lichtgitter ausgestaltet, die die Präsenz eines Objekts in einem Überwachungsbereich durch Unterbrechung eines Lichtstrahls oder Reflexion des Lichtstrahls aus dem Überwachungsbereich detektieren.

Zur Überprüfung der Funktionsfähigkeit, insbesondere zur zuverlässigen Objektdetektion und Objektlokalisierung in einem Sicherheitssystem ist
eine Kontrolle der wichtigsten Leistungsfunktionen nötig. Bei bekannten Lösungen werden dazu Testobjekte im Überwachungsbereich des Sensors vorgesehen, und vor oder während der Messung geprüft, ob diese Testobjekte korrekt nachgewiesen werden.

Die Präsenz solcher Testobjekte im Überwachungsbereich kann jedoch für die Überwachung selbst hinderlich sein.

Aufgabe der vorliegenden Erfindung ist die Bereitstellung einer Möglichkeit zur zuverlässigen Überprüfung der Funktionsfähigkeit eines optischen Sensors oder Teilen davon.

Diese Aufgabe wird mit einer Kombination aus einem optischen Sensor und einem Vorsatzmodul mit den Merkmalen des Anspruchs 1 bzw. einem Verfahren zum Betreiben eines optischen Sensors mit den Merkmalen des Anspruchs 12 gelöst. Bevorzugte Ausführungsformen und Ausgestaltungen sind Gegenstand von Unteransprüchen.

Ein erfindungsgemäßes Vorsatzmodul dient zum Aufsetzen auf einen optischen Sensor, der eine Sendeeinheit zum Aussenden von Detektionslicht in einen Detektionsbereich, einen Empfänger zum Empfangen von aus dem Detektionsbereich zurückreflektiertem oder zurückremittiertem Licht oder durch den Detektionsbereich transmittiertem Licht und eine Auswerteeinheit zum Auswerten des empfangenen Lichts aufweist.

Sind die Sendeeinheit und der Empfänger nicht in einer Einheit integriert - also wenn zum Beispiel ein Überwachungsbereich in Transmissionsgeometrie überwacht wird - so soll das Aufsetzen des Vorsatzmoduls auf den optischen Sensor das Aufsetzen auf denjenigen Teil bedeuten, der die Sendeeinheit umfasst.

Ein erfindungsgemäßes Vorsatzmodul kann dementsprechend auch in den Strahlengang des Detektionslichtes eines bereits existierenden optischen Sensors gebracht werden und so dessen Funktionssicherheit gewährleisten.

Das erfindungsgemäße Vorsatzmodul weist ein Gehäuse mit einer Eintrittsöffnung für den Eintritt von Detektionslicht in das Vorsatzmodul auf. Durch diese Eintrittsöffnung kann das Detektionslicht des optischen Sensors in das Vorsatzmodul eintreten.

Innerhalb des Gehäuses des erfindungsgemäßen Vorsatzmoduls befindet sich ein Testlichtempfänger zum Empfang und zur Leistungsmessung von als Testlicht auf den Testlichtempfänger fallendem Licht, das zumindest einen Teil des Detektionslichtes des optischen Sensors umfasst. Eine Signalausgabeeinrichtung dient zur Ausgabe eines mit der Testlichtleistung korrelierten Ausgangssignals. Innerhalb des Vorsatzmoduls wird also zumindest ein Teil des Detektionslichtes zu einem Testlichtempfänger gelenkt und dort als Testlicht gemessen und ausgewertet. Da die Signalausgabeeinrichtung des Vorsatzmoduls ihr eigenes von der Testlichtleistung abhängiges Signal erzeugt, ist die Sicherheit deutlich erhöht.

Das erfindungsgemäße Vorsatzmodul stellt also eine Möglichkeit zur Verfügung, die Funktionsfähigkeit eines optischen Sensors durch eine externe Einheit kontinuierlich zu prüfen. Stimmt das gemessene Leistungssignal des Testlichtempfängers nicht mit einem z. B. in einem Speicher abgelegten erwarteten Signal überein, ist von einer Funktionsstörung des Sensors auszugehen, also z.B. einer Fehlfunktion der Sendeeinheit des optischen Sensors.

Dazu kann die Signalausgabeeinrichtung einer ersten Ausführungsform des Vorsatzmoduls zur Erzeugung und Abgabe eines von der gemessenen Leistung des Testlichts abhängigen Leistungssignals ausgestaltet sein. Dieses Leistungssignal kann z.B. von der Auswerteeinheit des optischen Sensors ausgewertet werden. Lässt sich an dem Leistungssignal ablesen, dass eine Fehlfunktion des Sensors vorliegt, also z.B. die Leistung Null gemessen wird, kann die Auswerteeinheit des optischen Sensors z.B. ein Warnsignal an einen Benutzer abgeben oder ein Stoppsignal an eine gefahrenträchtige Maschine. Dazu ist das Vorsatzmodul über einer entsprechenden Signalleitung mit der Auswerteeinheit des optischen Sensors verbindbar. Auf diese Weise lässt sich die in der Regel ohnehin vorhandene Auswerteeinheit des optischen Sensors auf einfache und kostengünstige Weise auch für die Funktionsüberwachung durch das Vorsatzmodul verwenden. Die Auswerteeinheit des optischen Sensors, die dazu dient, das Signal des optischen Sensors auszuwerten, weist z.B. bei einem Sicherheitssensor ohnehin eine Funktion zum Abgeben eines Warn- und/oder Stoppsignals aus, wenn der optische Sensor z.B. in seinem Überwachungsbereich ein unzulässiges Objekt feststellt.

Bei einer alternativen Ausführungsform weist das Vorsatzmodul selbst eine Testlichtauswerteeinheit zur Auswertung der mit dem Testlichtempfänger gemessenen Testlichtleistung auf. Die Signalausgabeeinrichtung kann dann ausgestaltet sein, um in Abhängigkeit des Auswertungsergebnisses der Testlichtauswerteeinheit zum Beispiel ein Warnsignal direkt an einen Benutzer abzugeben und/oder ein Stoppsignal direkt an eine gefahrenträchtige Maschine. Hier wertet also die Testlichtauswerteeinheit des Vorsatzmoduls das Leistungssignal des Testlichtempfängers selbst aus und das Vorsatzmodul erzeugt selbst das gegebenenfalls notwendige Ausgabesignal, so dass hier eine Auswerteeinheit des optischen Sensors nicht für die Funktion des Vorsatzmoduls notwendig ist.

Wird von der Signalausgabeeinrichtung des Vorsatzmoduls ein eigenes Warn- und/oder Stoppsignal erzeugt, arbeitet das Vorsatzmodul eigensicher und ist nicht von der Funktionsfähigkeit der Auswerteeinheit des optischen Sensors abhängig.

Das erfindungsgemäße Vorsatzmodul muss derart angeordnet werden, dass es zumindest zu einem vorbestimmten Zeitpunkt im Strahlengang des Detektionslichtes ist. Vorteilhafterweise ist dazu eine Befestigungseinrichtung vorgesehen, die die Befestigung des Vorsatzmoduls an dem optischen Sensor bzw. an dessen eine Sendeeinheit umfassenden Teil ermöglicht. Es kann sich dabei zum Beispiel um eine mechanische Verbindungsmöglichkeit handeln, zum Beispiel um eine Schraubverbindung, eine Klemmverbindung oder eine Rastverbindung. Möglich sind zum Beispiel auch magnetische Verbindungen. Dazu weist eine Ausgestaltung des Vorsatzmoduls einen Magneten auf, der mit einem metallischen Teil des optischen Sensors wechselwirken kann (oder umgekehrt).

Eine bevorzugte Ausführungsform des erfindungsgemäßen Vorsatzmoduls weist eine Austrittsöffnung zum Austritt von Detektionslicht aus dem Vorsatzmodul in den Detektionsbereich auf. Dabei ist bei dieser bevorzugten Ausführungsform ein Teilerspiegel im Strahlengang zwischen Eintritts- und Austrittsöffnung vorgesehen, mit dessen Hilfe ein Teilstrahl aus dem Detektionslicht als Testlicht derart ausgekoppelt wird, dass er zumindest zu einem Zeitpunkt zu dem Testlichtempfänger abgelenkt wird. Bei einer solchen Ausführungsform ist sichergestellt, dass nur ein Teil des Detektionslichtes zu dem Testlichtempfänger gelenkt wird. Der andere Teil steht nach Austritt aus dem Vorsatzmodul für die Detektionsfunktion des optischen Sensors zur Verfügung.

Eine solche Ausführungsform kann zum Beispiel vorteilhaft bei einem optischen Sensor mit einem festen Strahlengang, wie zum Beispiel einer Lichtschranke oder einem abstandsmessenden Sensor, der nach dem Lichtlaufzeit-Prinzip arbeitet, zum Einsatz kommen. Sie kann aber auch vorteilhaft bei Scannersystemen eingesetzt werden, wie es weiter unten erläutert werden wird.

Grundsätzlich kann der Teilerspiegel in dem Vorsatzmodul dieser Ausführungsform so angeordnet sein, dass er das ausgekoppelte Teillicht permanent in Richtung des Testlichtempfängers ablenkt. Eine solche Ausgestaltung hat den Vorteil, dass keine zusätzlichen mechanisch beweglichen Elemente im Vorsatzmodul vorhanden sind. Vorteilhaft kann es jedoch auch sein, wenn der Teilerspiegel beweglich ist, insbesondere drehbar um eine Achse, die dem Strahlengang des Detektionslichts im Vorsatzmodul entspricht. Am Testlichtempfänger wird dann das ausgekoppelte Testlicht in periodischen Abständen in Abhängigkeit der Drehgeschwindigkeit des Teilerspiegels auftreffen. Damit ist auch der zeitliche Verlauf der Lichteinstrahlung an dem Testlichtempfänger als Nachweis für die Funktionsfähigkeit des optischen Sensors verfügbar, so dass die Sicherheit weiter erhöht wird. Durch die Drehung des Teilerspiegels ist insbesondere eine Frequenz vorgegeben, die eine sehr gute Diskriminierung des Testlichts im optischen Sensor ermöglicht. Der erwartete Verlauf kann aus der Geschwindigkeit des drehbaren Teilerspiegels gut abgeprüft werden und z.B. anhand der Frequenz der Drehung des Teilerspiegels gut von Störlicht unterschieden werden.

Der Begriff Gehäuse soll im vorliegenden Text nicht notwendigerweise als ein abgeschlossenes Gehäuse verstanden werden. Wenn z.B. der optische Sensor und das Vorsatzmodul in einer an sich sauberen Atmosphäre verwendet werden, ist ein dichter Abschluss des Gehäuses nicht notwendig, sondern es reicht zum Beispiel ein Gehäuse in Form von entsprechenden Trägerelementen, die die funktionsrelevanten Komponenten des Vorsatzmoduls, also insbesondere den Testlichtempfänger und - bei einer entsprechenden Ausführungsform - den Teilerspiegel tragen.

Eine bevorzugte Ausgestaltung sieht jedoch vor, dass das Vorsatzmodul ein abgeschlossenes Gehäuse aufweist, das zumindest nach der Verbindung mit dem optischen Sensor nach außen hin dicht ist. Das gewährleistet eine hohe Funktionssicherheit, weil keine Verschmutzungen innerhalb des Vorsatzmoduls auftreten können.

Eine bevorzugte Ausgestaltung einer Ausführungsform mit einem Teilerspiegel sieht vor, dass die Austrittsöffnung ein abgeschlossenes transparentes Austrittsfenster aufweist, aus dem der Teil des Detektionslichts, der nicht mit dem Teilerspiegel in Richtung des Testlichtempfängers ausgekoppelt wird, aus dem Vorsatzmodul austritt. Vorzugsweise ist dieses transparente Austrittsfenster nicht senkrecht zum Strahlengang des Detektionslichts angeordnet und wird also schräg von dem Detektionslicht durchstrahlt. Auf diese Weise ist sichergestellt, dass das Austrittsfenster nicht zu unerwünschten Reflexionen zurück zum optischen Sensor führt.

Vorteilhafterweise kann außerdem vorgesehen sein, dass das Austrittsfenster eine Einrichtung zur Überwachung der Fensterverschmutzung aufweist, die z.B. ein Signal an die Auswerteeinheit des optischen Sensors geben kann, wenn eine Fensterverschmutzung des Austrittsfensters nachgewiesen wird. Nachdem dann die Funktionsfähigkeit des optischen Sensors mit dem vorgeschalteten Vorsatzmodul nicht mehr sichergestellt wäre, kann dann von der Auswerteeinheit des optischen Sensors wiederum ein Warn- und/oder Stoppsignal an einen Benutzer bzw. eine Maschine abgegeben werden.

Ein solches Vorsatzmodul mit einem auf Verschmutzung überwachten Austrittsfenster kann vorteilhaft auch bei einem optischen Sensor eingesetzt werden, der zwar ein Sensoraustrittsfenster, aber ein nicht auf Verschmutzung überwachtes Sensoraustrittsfenster aufweist. Ein solches Vorsatzmodul mit Fensterüberwachung kann also die Sicherheit eines an sich einfach aufgebauten optischen Sensors ohne Fensterüberwachung deutlich erhöhen.

Bei einer Ausführungsform des erfindungsgemäßen Vorsatzmoduls, die sich insbesondere für einen als Scanner mit einem Scanbereich ausgestalteten optischen Sensor eignet, ist das Vorsatzmodul derart ausgestaltet, dass es im Scanbereich des Scanners angeordnet werden kann, so dass zu einem Zeitpunkt während eines Scanvorgangs zumindest ein Teil des Detektionslichtes durch die Eintrittsöffnung des Vorsatzmoduls zum Testlichtempfänger gelangt.

Bei einem optischen Scanner wird in an sich bekannter Weise Detektionslicht zum Beispiel mit Hilfe einer schwenkbaren Ablenkeinheit derart in den Scanbereich geschickt, dass der Lichtstrahl diesen periodisch überstreicht. Aus dem Licht, das aus dem Scanbereich wieder in Richtung des Scanners zurückreflektiert oder zurückremittiert wird, kann auf die Anwesenheit eines Objektes im Scanbereich geschlossen werden. Je nachdem, ob sich an der Stelle des detektierten Objektes ein Objekt befinden darf oder nicht, kann ein entsprechendes Signal erzeugt und ausgegeben werden. Der Scanbereich des Scanners wird dabei durch den Raumbereich definiert, der während eines Scanvorgangs von dem Detektionslicht überstrichen wird. Aus der gegebenenfalls gemessenen Lichtlaufzeit zwischen Scanner, Objekt und zurück zum Scanner kann außerdem auf die Entfernung des Objekts zurückgeschlossen werden.

Der Scanbereich muss nicht notwendigerweise mit dem Raumbereich übereinstimmen, der auf diese Weise überwacht werden soll. Ein erfindungsgemäßes Vorsatzmodul, das insbesondere zur Funktionsüberwachung eines solchen Scanners eingesetzt werden kann, kann zum Beispiel in einem Teil des Scanbereichs angeordnet sein, der nicht auf die Anwesenheit von Objekten überwacht werden muss. Während eines vollständigen Scanvorgangs wird dann zu einem bestimmten Zeitpunkt das Detektionslicht in das Vorsatzmodul eintreten und kann dort zu dem Testlichtempfänger geführt werden und in beschriebener Weise zur Funktionsüberwachung eingesetzt werden.

Wenn sich das Vorsatzmodul in einem Winkelbereich des Scanners befindet, der nicht zum überwachten Bereich gehört, kann das komplette Detektionslicht in diesem Winkelbereich in dem Vorsatzmodul als Testlicht zum Einsatz kommen.

Alternativ ist es auch möglich, dass mit einem Scanner ein Vorsatzmodul eingesetzt wird, bei dem zum Beispiel mit Hilfe eines Teilerspiegels ein Teil des Detektionslichtes ausgekoppelt und zu einem Testlichtempfänger geführt wird, wie es oben beschrieben ist. Eine solche Ausführungsform mit einem Teilerspiegel weist ein Austrittsfenster auf, durch das der nicht zum Testlichtempfänger abgelenkte Teil des Detektionslichtes wieder austreten kann und zur Objektdetektion in dem Überwachungsbereich des Scanners zur Verfügung steht. Ein solches Vorsatzmodul ist also auch einsetzbar, wenn es sich in einem Winkelbereich des Scanners befindet, der zum Überwachungsbereich gehört. Je nach Anforderung muss dann bei der Auswertung der Signale des optischen Sensors berücksichtigt werden, dass in dem Winkelbereich, in dem sich das Vorsatzmodul befindet, nur eine schwächere Lichtleistung in den Überwachungsbereich eintritt.

Bei einem erfindungsgemäßen Verfahren zum Betreiben eines optischen Sensors wird Detektionslicht in einen Detektionsbereich gesendet und aus dem Detektionsbereich zurückremittiertes oder zurückreflektiertes Licht oder durch den Detektionsbereich transmittiertes Licht zur Bildung eines Detektionssignals ausgewertet. Im Strahlengang des Detektionslichtes wird ein Vorsatzmodul angeordnet, in dem zumindest ein Teil des Detektionslichtes des optischen Sensors als Testlicht zu einem Testlichtempfänger geleitet wird, der zum Empfang und zur Leistungsmessung des Testlichtes ausgestaltet ist. Von dem Vorsatzmodul wird dann ein mit der Testlichtleistung korreliertes Ausgangssignal ausgegeben.

Bei dem erfindungsgemäßen Verfahren ist es also mit einem zusätzlichen Vorsatzmodul möglich, während des Detektionsvorgangs des optischen Sensors dessen Funktionsfähigkeit zuverlässig zu überprüfen. Die Vorteile eines erfindungsgemäßen Verfahrens ergeben sich aus der obigen Schilderung der Vorteile eines erfindungsgemäßen Vorsatzmoduls.

Bevorzugte Ausgestaltungen des erfindungsgemäßen Verfahrens ergeben sich in analoger Weise aus den bevorzugten Ausführungsformen des erfindungsgemäßen Vorsatzmoduls.

Insbesondere kann vorgesehen sein, dass das mit der Testlichtleistung korrelierte Ausgangssignal direkt in die Auswerteeinheit des verwendeten optischen Sensors derart eingespeist wird, dass diese aus dem mit der Leistung des Testlichtes korrelierten Ausgangssignal ablesen kann, ob eine Fehlfunktion des Sensors vorliegt, also ob zum Beispiel die Leistung Null gemessen wird. Die Auswerteeinheit des optischen Sensors kann dann zum Beispiel ein Warnsignal an einen Benutzer geben oder ein Stoppsignal an eine gefahrenträchtige Maschine.

Eine andere Ausgestaltung des erfindungsgemäßen Verfahrens sieht vor, dass das Vorsatzmodul selbst das Signal des Testlichtempfängers auswertet, um zu detektieren, ob die Testlichtleistung dem erwarteten Wert entspricht. Ist dies nicht der Fall, kann dann bei dieser Ausgestaltung des Verfahrens direkt von dem Vorsatzmodul ein entsprechendes Warn- oder Stoppsignal ausgegeben werden. Diese Ausgestaltung ermöglicht also einen eigensicheren Betrieb des Vorsatzmoduls, der unabhängig von der Funktionsfähigkeit des optischen Sensors und insbesondere dessen Auswerteeinheit ist.

Das erfindungsgemäße Verfahren lässt sich zum Beispiel für einen optischen Sensor einsetzen, der als Scanner ausgestaltet ist. Dazu wird das Vorsatzmodul in einem Bereich des Scanbereichs in den Strahlengang des Detektionslichts gebracht, der vorteilhafterweise zum Beispiel nicht auf die Anwesenheit oder Abwesenheit eines Objekts hin überwacht werden muss. Auf diese Weise wird das Detektionslicht zu einem vorbestimmten Zeitpunkt während eines Scanvorgangs durch das Eintrittsfenster in das Vorsatzmodul eintreten und auf den Testlichtempfänger fallen, um dort hinsichtlich seiner Leistung in beschriebener Weise ausgewertet zu werden.

Andererseits ist es auch möglich, das erfindungsgemäße Verfahren in einem Vorsatzmodul einzusetzen, bei dem ein Teilerspiegel vorgesehen ist, mit dem nur ein Teil des Detektionslichtes in dem Vorsatzmodul ausgekoppelt und zu einem Testlichtempfänger geleitet wird, um dort in beschriebener Weise ausgewertet werden. Ein solches Verfahren lässt sich zum Beispiel einsetzen, wenn der optische Sensor ein Scanner ist und das Vorsatzmodul in einem Bereich des Scanwinkels angebracht werden muss, der auf die Anwesenheit oder Abwesenheit von Objekten untersucht werden muss. Durch die Verwendung des Teilerspiegels ist sichergestellt, dass auch bei Auskopplung eines Teils des Detektionslichts noch ein Anteil des Detektionslichts durch das Vorsatzmodul hindurch in den Detektionsbereich des optischen Detektors gelangen kann.

Die Erfindung wird im Detail anhand der beiliegenden Figuren erläutert, die schematische Darstellungen erfindungsgemäßer Ausführungsformen zeigen. Jeweils sich entsprechende Komponenten sind mit gleichen Bezugsziffern bezeichnet. Es zeigen:
- Fig. 1: eine erste Ausführungsform eines erfindungsgemäßen Vorsatzmoduls,
- Fig. 2: eine zweite Ausführungsform eines erfindungsgemäßen Vorsatzmoduls,
- Fig. 3: eine dritte Ausführungsform eines erfindungsgemäßen Vorsatzmoduls,
- Fig. 4: eine vierte Ausführungsform eines erfindungsgemäßen Vorsatzmoduls,
- Fig. 5: eine fünfte Ausführungsform eines erfindungsgemäßen Vorsatzmoduls,
- Fig. 6: ein erfindungsgemäßes Vorsatzmodul beim Einsatz mit einem Scanner in einem ersten Zustand,
- Fig. 7: die Ausführungsform der Fig. 6 in einem anderen Zustand,
- Fig. 8: eine andere Ausführungsform eines erfindungsgemäßen Vorsatzmoduls im Einsatz mit einem optischen Scanner in einem ersten Zustand, und
- Fig. 9: die Ausgestaltung der Fig. 8 in einem anderen Zustand.

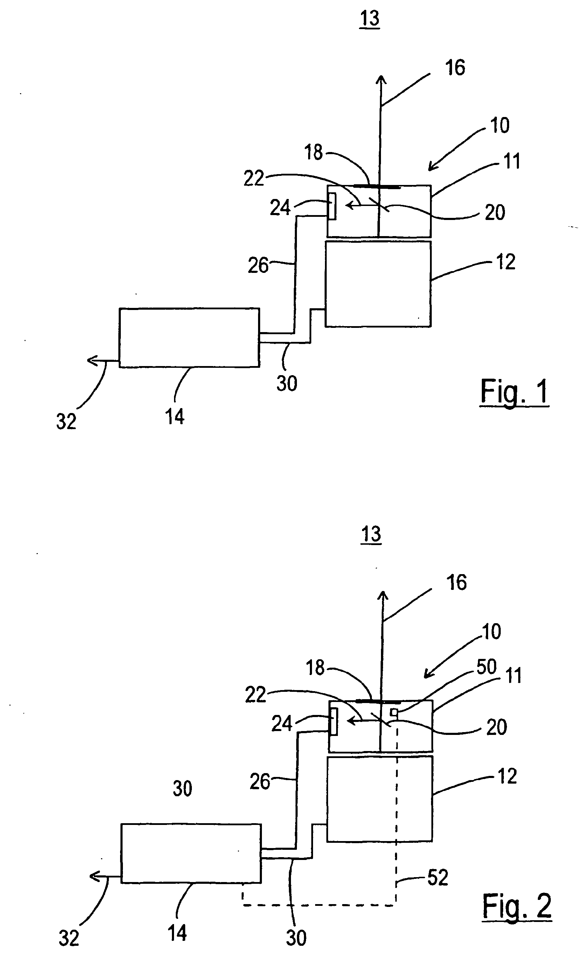

In Fig. 1 ist ein an sich bekannter optischer Sensor 12 gezeigt, der eine Sendelichtquelle, z.B. eine Laserdiode, aufweist, die Detektionslicht 16 in Richtung eines Detektionsbereichs 13 schickt. Über eine Signalleitung 30 wird ein Signal dieses optischen Sensors 12 an eine Auswerteeinheit 14 gegeben. Alternativ kann die Auswerteeinheit auch in dem optischen Sensor 12 integriert vorgesehen sein.

Es kann sich bei dem optischen Sensor 12 z.B. um einen Entfernungsmesser handeln, der aus der Laufzeit von aus dem Detektionsbereich 13 zurückgeworfenem Licht die Entfernung eines reflektierenden Objekts im Detektionsbereich bestimmt. Dazu weist der optische Sensor 12 in an sich bekannter Weise einen Empfänger auf, dessen Signal von der Auswerteeinheit 14 entsprechend ausgewertet wird.

Bei dem optischen Sensor kann es sich aber auch z.B. um eine Lichtschranke handeln. In einem solchen Fall wird z.B. das Detektionslicht 16 auf einen Reflektor an bekannter Position im Detektionsbereich 13 gestrahlt und das reflektierte Licht ausgewertet. Wird z.B. kein reflektiertes Licht festgestellt, so ist davon auszugehen, dass der Weg zwischen dem Sensor 12 und dem Reflektor nicht mehr frei ist. Nicht gezeigt ist eine Ausgestaltung, bei der das Detektionslicht 16 auf einen entfernten Empfänger fällt und - wenn das Licht an dem Empfänger nicht mehr nachgewiesen werden kann - von einer Blockierung des Lichtwegs zwischen dem Sensor und dem entfernten Empfänger ausgegangen werden muß.

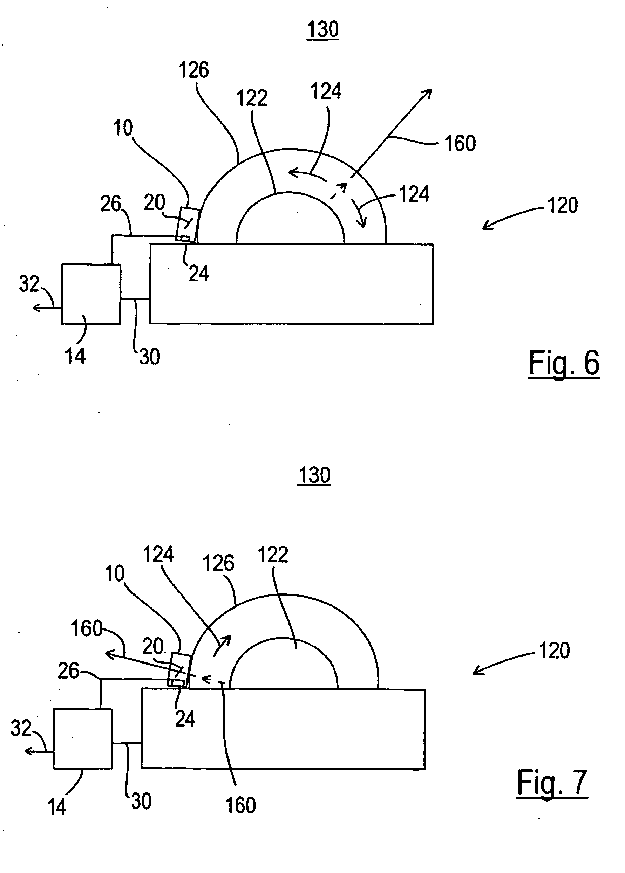

Schließlich kann es sich bei dem optischen Sensor 12 auch um einen Scanner handeln, der derart bewegt wird, dass er einen Raumbereich in an sich bekannter Weise mit einem Lichtstrahl überstreicht und das aus diesem Raumbereich reflektierte Licht zur Objektdetektion auswertet. Entsprechende Ausführungsformen werden weiter unten mit Bezug zu Fig. 6 bis 9 beschrieben.

Je nach Anwendung und Anforderung gibt die Auswerteeinheit 14 zum Beispiel ein Warnsignal oder ein Stoppsignal 32 an eine Maschine aus, wenn sich im Detektionsbereich z.B. ein unzulässiges Objekt befindet.

Im Strahlengang des Detektionslichts befindet sich das Vorsatzmodul 10, das hier ein abgeschlossenes Gehäuse 11 aufweist. Das Vorsatzmodul kann z.B. mit Hilfe entsprechender Befestigungseinrichtungen direkt an dem optischen Sensor 12 befestigt werden.

Der Übersichtlichkeit halber sind das Austrittsfenster des optischen Sensors 12 für das Detektionslicht 16 und das Eintrittsfenster in das Vorsatzmodul 20 nicht explizit dargestellt.

Das Detektionslicht 16 fällt durch das transparente Austrittsfenster 18 des Vorsatzmoduls 10 in den sich anschließenden Detektionsbereich 13, der überwacht werden soll. Mit Hilfe eines halbdurchlässigen, schräg im Strahlengang angeordneten Spiegels 20 wird ein Teil 22 des Detektionslichts 16 aus dem Strahlengang ausgekoppelt und zu einem Lichtempfänger 24, zum Beispiel einer Fotodiode oder einem Fotodiodenarray, abgelenkt. Das Signal des Lichtempfängers 24 wird über eine Signalleitung 26 an die Auswerteeinheit 14 geschickt.

Diese kann dann die an dem Lichtempfänger 24 gemessene Leistung des ausgekoppelten Teillichts 22 auswerten. Entspricht die Leistung nicht der erwarteten Leistung, kann die Auswerteeinheit 14 des optischen Sensors 12 über den Signalausgang 32 ebenfalls ein Warn- und/oder Stoppsignal ausgegeben. Dies ist z.B. der Fall, wenn die Lichtquelle des optischen Sensors defekt ist oder nicht mehr die gewünschte Leistung bringt. Eine ordnungsgemäße Funktion des optischen Sensors 12 ist dann nicht mehr sichergestellt, so dass auf diese Weise eine Fehlfunktion festgestellt und zur Erzeugung eines entsprechenden Signals am Signalausgang 32 verwertet werden kann.

Sowohl das Austrittsfenster 18 des Vorsatzmoduls als auch das Austrittsfenster des optischen Sensors 12 und das Eintrittsfenster des Vorsatzmoduls 10 können jeweils schräg angeordnet sein, um Reflexionen zurück in den Empfänger des optischen Sensors 12 zu vermeiden.

Fig. 2 zeigt eine Abwandlung der ersten Ausführungsform der Fig. 1 mit einer zusätzlichen Einrichtung 50 zur Überwachung der Verschmutzung des Austrittsfensters 18 des Vorsatzmoduls 10. Die Einrichtung 50 zur Überwachung der Verschmutzung des Fensters kann z.B. die Reflexion eines Lichtsignals am Austrittsfenster 18 auswerten, um dessen Verschmutzungsgrad festzulegen.

Nicht dargestellt ist eine andere Ausgestaltung, bei der die Einrichtung zur Überwachung der Fensterverschmutzung einen Signalgeber auf der einen Seite des Austrittsfensters und einen Signalempfänger auf der anderen Seite des Austrittsfensters umfasst, so dass die Transmission des Austrittsfensters gemessen werden kann.

Eine Signalleitung 52 dient zur Übermittlung des Signals der Einrichtung 50 zur Überwachung der Verschmutzung des Austrittsfensters 18 an die Auswerteeinheit 14 des optischen Sensors 12. Wenn z.B. das Austrittsfenster 18 eine zu starke Verschmutzung aufweist, kann auf diese Weise die Auswerteeinheit des optischen Sensors 14 ebenfalls ein entsprechendes Warn- und/oder Stoppsignal erzeugen, da die Funktionsfähigkeit nicht mehr gewährleistet ist.

Das Eintrittsfenster des Vorsatzmoduls kann selbstverständlich ebenfalls mit Hilfe einer entsprechenden Einrichtung auf Verschmutzung überwacht werden, wobei hier die Gefahr der Verschmutzung geringer ist, weil das Vorsatzmodul bei der gezeigten Anwendung mit seinem Eintrittsfenster direkt an den optischen Sensor 12 anschließt.

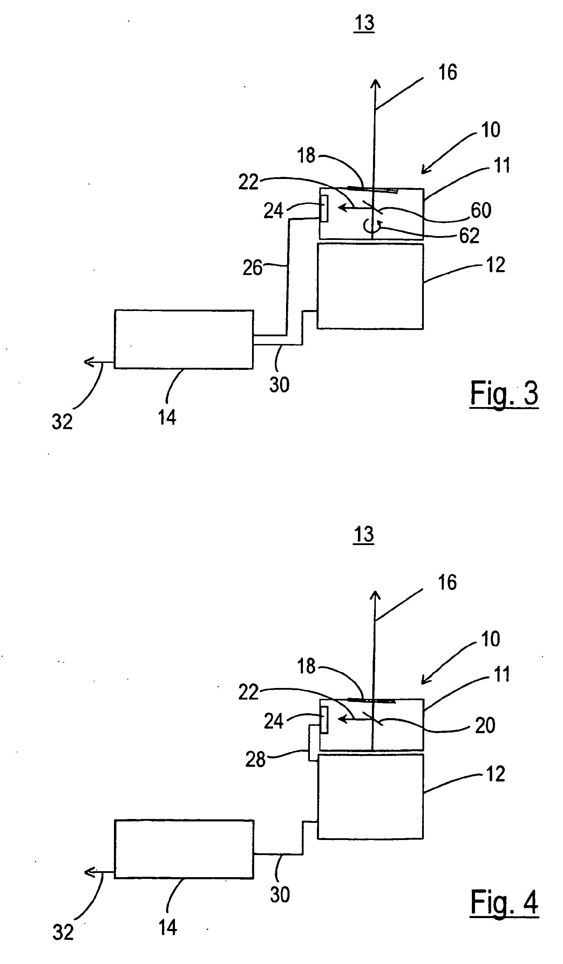

Fig. 3 zeigt in Abwandlung der Ausgestaltung der Fig. 1 einen beweglichen, schräg im Strahlengang angeordneten Teilerspiegel 60, der sich in Rotationsrichtung 62 um die Strahlrichtung des Detektionslichts 16 dreht. Das ausgekoppelte Teillicht 22 fällt bei einer kontinuierlichen Drehung des Teilerspiegels 60 in periodischen Abständen auf den Testlichtempfänger 24 und wird dementsprechend in periodischen Abständen nachgewiesen und ausgewertet. Aus dem zeitlichen Verlauf des Signals am Testlichtempfänger 24 lässt sich mit Hilfe der Auswerteeinheit 14 das Testsignal sehr gut diskriminieren und auswerten. Ist das Testlichtsignal nicht erwartungsgemäß, kann wiederum am Ausgang 32 ein Warn- und/oder Stoppsignal erzeugt werden.

Fig. 4 zeigt eine Ausgestaltung, bei der mit Hilfe einer Signalleitung 28 das Signal des Testlichtempfängers 24 in den optischen Sensor 12 eingespeist werden kann, um dort über die Signalleitung 30 an die Auswerteeinheit 14 des optischen Sensors geleitet zu werden. Eine solche Ausgestaltung kann zum Beispiel vorsehen, dass beim Befestigen des Vorsatzmoduls 10 an dem optischen Sensor 12 eine Steckverbindung geschlossen wird, die dann die Signalleitung 28 darstellt.

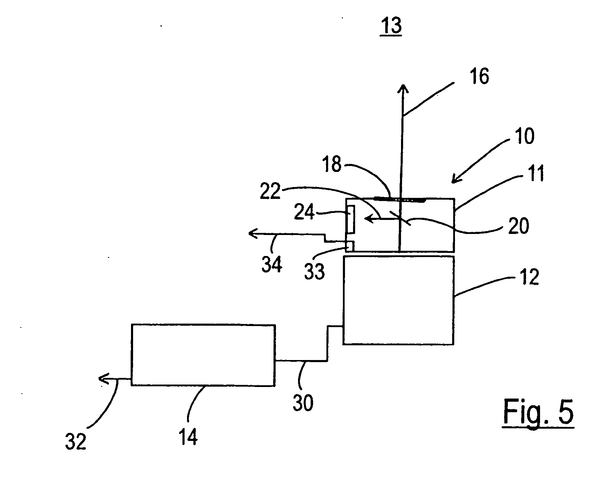

Fig. 5 zeigt schließlich eine Ausführungsform als Abwandlung der Ausführungsform der Fig. 1, bei der das Vorsatzmodul 10 selbst über eine Auswerteeinheit 33 verfügt, in die das Signal des Testlichtempfängers 24 eingespeist wird und mit dessen Hilfe ein Warn- und/oder Stoppsignal erzeugt werden kann. Eine solche Ausführungsform des Vorsatzmoduls 10 benötigt keine Verbindung zu der Auswerteeinheit 14 des optischen Sensors 12 und gewährleistet damit eine sichere Überprüfung des optischen Sensors 12 unabhängig von der Funktion und Funktionsfähigkeit der Auswerteeinheit 14.

Bei der Testlichtauswerteeinheit 33 kann es sich zum Beispiel um einen entsprechend programmierten Mikroprozessor handeln. Alternativ kann auch eine einfache Schwellwertdetektion zum Abprüfen der von dem Testlichtempfänger 24 empfangenen Lichtleistung implementiert werden.

Nicht gezeigt ist in Fig. 5 der Übersichtlichkeit halber die Signalverbindung zwischen dem Testlichtempfänger 24 und der Testlichtauswerteeinheit 33, die bei dieser Ausführungsform innerhalb des Vorsatzmoduls vorgesehen sind.

Insbesondere die in den Fig. 1 bis 5 beschriebenen Merkmale der einzelnen Ausführungsformen können auch in anderer Zusammensetzung kombiniert sein. So können zum Beispiel auch die Ausgestaltungen der Fig. 3 bis 5 über eine Einrichtung zur Überwachung des Austrittsfensters verfügen, wie sie mit Bezug zu Fig. 2 beschrieben ist. Auch ein beweglicher Teilerspiegel, wie er mit Bezug zu Fig. 3 beschrieben ist, kann bei den anderen Ausgestaltungen zum Beispiel der Fig. 1, 2, 4 und 5 vorgesehen sein.

Die Fig. 6 bis 9 sind auf Ausführungsformen gerichtet, bei denen das erfindungsgemäße Vorsatzmodul bei einem optischen Scanner 120 eingesetzt wird.

Optische Scanner, wie sie zum Beispiel in Fig. 6 bis 9 gezeigt sind, sind an sich bekannt. Der Scanner 120 umfasst eine Strahlerzeugung- und Ablenkeinheit 122, innerhalb der in an sich bekannter Weise ein Lichtstrahl 160 erzeugt wird, der im Folgenden als Detektionslicht bezeichnet wird. Die Strahlerzeugungs- und Ablenkeinheit 122 ist derart ausgestaltet, dass der Detektionslichtstrahl 160, der zum Beispiel Laserlicht umfassen kann, einen Detektionsbereich überstreicht, der hier durch den Scanbereich 130 gebildet wird. Befindet sich in diesem Scanbereich 130 zum Beispiel ein Objekt, so wird das Licht, das unter dem entsprechenden Scanwinkel in den Scanbereich ausgesendet wird, zurückgeworfen und kann in an sich bekannter Weise von einem Detektor innerhalb des Scanners 120 detektiert werden. Auf diese Weise kann die Winkellage eines Objektes in dem Scanbereich 130 festgestellt werden. Wird außerdem die Lichtlaufzeit eines Lichtpulses vom Scanner 120 bis zum reflektierenden Objekt und zurück gemessen, so kann mit Hilfe der Lichtgeschwindigkeit auf die Entfernung des Objekts geschlossen werden.

Der Scanner 120 ist dabei derart ausgestaltet, dass der Detektionslichtstrahl 160, der periodisch den Scanbereich 130 überstreicht, durch eine Frontscheibe 126 in den Scanbereich austritt. Die Frontscheibe kann zum Beispiel eine halbrund geformte Glasscheibe sein. Der Scanner 120 sendet die gemessenen Signale über die Anwesenheit oder Abwesenheit oder die Lage eines Objektes im Scanbereich über die Signalleitung 30 an eine Auswerteeinheit 14, die ebenfalls in an sich bekannter Weise die entsprechende Information verwertet, um gegebenenfalls über den Signalausgang 32 zum Beispiel ein Warn- und/oder Stoppsignal zu erzeugen, wenn sich ein unzulässiges Objekt im Scanbereich befindet.

In einem Randbereich des Scanbereiches ist bei der in Fig. 6 beschriebenen erfindungsgemäßen Ausführungsform ein Vorsatzmodul 10 vorgesehen, das ähnlich aufgebaut ist wie die Vorsatzmodule 10 zum Beispiel der Fig. 1, 2, 3, 4 oder 5. Es weist bei der Ausführungsform der Fig. 6 ebenfalls ein (hier der Übersichtlichkeit halber nicht mit Bezugszeichen versehenes) Gehäuse 11, einen Teilerspiegel 20 und einen Lichtempfänger 24 auf. Außerdem weist das Vorsatzmodul 10 ebenso wie die Vorsatzmodule 10 der Fig. 1 bis 5 ein Eintrittsfenster und ein Austrittsfenster 18 auf, die in Fig. 6 der Übersichtlichkeit halber nicht dargestellt sind.

Fig. 7 zeigt dieselbe Ausführungsform in einem anderen Betriebszustand. Der Detektionslichtstrahl 160 des Scanners 120 befindet sich gerade in einer anderen Stellung, in der er durch die Frontscheibe 126 des Scanners 120 und das Eintrittsfenster des Vorsatzmoduls 10 in das Vorsatzmodul 10 eintritt. Ein Teil des Lichts wird mit Hilfe des Teilerspiegels 20 auf den Lichtempfänger 24 abgelenkt und kann dort in einer Weise weiterverwertet werden, wie es mit Bezug zu den Ausführungsformen der Fig. 1 bis 5 beschrieben ist. Wird ein Vorsatzmodul mit einer Testlichtauswerteeinrichtung 33 mit einem Scanner 120 eingesetzt, wird wie oben mit Bezug zu Fig. 5 beschrieben über eine Signalausgabeleitung 34 direkt ein Warnsignal oder ein Stoppsignal ausgegeben. Wenn sich herausstellt, dass die an dem Lichtempfänger 24 zu diesem Zeitpunkt des Scanvorgangs gemessene Lichtleistung nicht den Erwartungen entspricht, kann auf einen Fehler des Systems, zum Beispiel eine Fehlfunktion der Strahlerzeugungseinrichtung des Scanners 120 geschlossen werden. Über die Signalleitung 26 erfährt dies die Auswerteeinheit 14 des optischen Sensors gegebenenfalls und kann zum Beispiel ein entsprechendes Warn- und/oder Stoppsignal über den Signalausgang 32 ausgeben.

Derjenige Teil des Detektionslichts 160, der nicht zum Lichtempfänger 24 abgelenkt wird, tritt, wie es mit Bezug zu den Fig. 1 bis 5 erläutert ist, aus dem Vorsatzmodul 10 wieder aus und steht zur Objektdetektion durch den Scanner 120 zur Verfügung.

Das Vorsatzmodul 10 wird hier zum Beispiel an der Frontscheibe 126 oder mit einer entsprechenden Befestigungsvorrichtung an dem Scanners 120 angebracht, zum Beispiel geklemmt, eingerastet oder ähnliches.

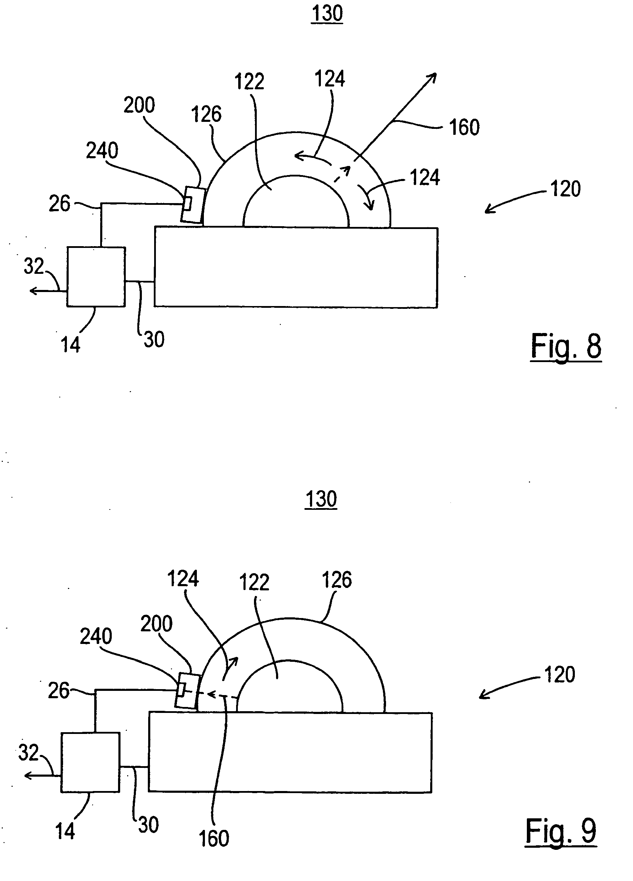

Fig. 8 zeigt eine Ausführungsform, bei der das Vorsatzmodul 200 an einer Stelle des vom Detektionslichtstrahl 160 überstrichenen Scanbereichs angeordnet ist, der nicht überwacht werden muss. Insofern ist es bei einer solchen Anwendung unschädlich, wenn das Detektionslicht 160 nicht mehr aus dem Vorsatzmodul 200 austreten kann, um zur Objektdetektion mit Hilfe des Scanners 120 zur Verfügung zu stehen. Ein solcher Bereich kann zum Beispiel durch einen schmalen Winkelbereich am Rand des hier 180° betragenden Scanbereichs liegen.

Fig. 9 zeigt einen Zustand, in dem das Detektionslicht 116 in ein entsprechend ausgestaltetes Vorsatzmodul 200 durch das hier nicht dargestellte Eintrittsfenster eintritt. Es trifft dort direkt auf den Lichtempfänger 240, der ähnlich wie der in den Fig. 1 bis 7 beschriebene Lichtempfänger 24 ein Leistungssignal erzeugen kann und über die Signalleitung 26 (oder über eine Steckverbindung ähnlich der oben mit Bezug zu Fig. 4 beschriebenen Steckverbindung 28) an die Auswerteeinheit 14 des optischen Scanners 120 weiterleiten kann.

In einer nicht dargestellten Ausgestaltung dieser Ausführungsform weist das Vorsatzmodul 200 eine Testlichtauswerteeinrichtung 33 auf, wie sie mit Bezug zu Fig. 5 beschrieben ist, die direkt ein Warn- oder Stoppsignal erzeugen kann.

Die mit Bezug zu Fig. 1 bis 5 beschriebenen Ausführungsformen können mit solchen Sensoren eingesetzt werden, bei denen zum Beispiel der Detektionslichtstrahl räumlich unverändert bleibt, wie es zum Beispiel bei einer Lichtschranke oder bei Lichtgittern der Fall ist. Die Ausgestaltungen der Fig. 6 bis 9 betreffen Beispiele eines zweidimensionalen Scanners, wobei das Vorsatzmodul zum Beispiel zur Prüfung der Funktionsfähigkeit der Strahlerzeugungseinrichtung eingesetzt werden kann. Ein erfindungsgemäßes Vorsatzmodul ist auch bei anderen Sensoren einsetzbar (zum Beispiel bei entfernungsmessenden Sensoren auf Basis des Lichtlaufzeit-Prinzips, bei Triangulationsmessanordnungen zur Entfernungsmessung etc.).

Das erfindungsgemäße Vorsatzmodul ermöglicht die kontinuierliche Überwachung der Funktionsfähigkeit eines optischen Sensors, ohne dass dieser speziell umgebaut werden müsste. Das Vorsatzmodul ist auch bereits mit vorhandenen optischen Sensoren einsetzbar, um zum Beispiel einen an sich einfach aufgebauten optischen Sensor deutlich sicherer zu gestalten.

### Bezugszeichenliste

- 10: Vorsatzmodul
- 11: Gehäuse
- 12: optischer Sensor
- 13: Detektionsbereich
- 14: Auswerteeinheit
- 16: Detektionslicht
- 18: Austrittsfenster des Vorsatzmoduls
- 20: Teilerspiegel
- 22: ausgekoppeltes Testlicht
- 24: Lichtempfänger
- 26, 28, 30: Signalleitung
- 32: Signalausgang
- 33: Testlichtauswerteeinheit
- 34: Signalausgang
- 50: Einrichtung zur Verschmutzungsmessung
- 52: Signalleitung
- 60: drehbarer Teilerspiegel
- 62: Drehrichtung
- 120: Scanner
- 122: Strahlerzeugungs- und Ablenkeinheit
- 124: Schwenkrichtung
- 126: Frontscheibe
- 130: Detektionsbereich
- 160: Detektionslicht
- 200: Vorsatzmodul
- 240: Lichtempfänger

## Patentansprüche

1. Kombination aus einem optischen Sensor (12, 120) und einem Vorsatzmodul (10, 200) zum Aufsetzen auf den optischen Sensor (12, 120) oder auf dessen eine Sendeeinheit umfassenden Teil, wobei der optische Sensor eine Sendeeinheit zum Aussenden von Detektionslicht (16, 160) in einen Detektionsbereich (13, 130), einen Empfänger zum Empfangen von aus dem Detektionsbereich (13, 130) zurückreflektiertem oder zurückremittiertem Licht oder durch den Detektionsbereich (13, 130) transmittiertem Licht und eine Auswerteeinheit (14) zum Auswerten des empfangenen Lichtes aufweist, wobei das Vorsatzmodul (10, 200) folgendes aufweist:
- ein Gehäuse (11) mit einer Eintrittsöffnung für den Eintritt wenigstens eines Teiles des Detektionslichts (16, 160) in das Vorsatzmodul (10, 200),
- einem Testlichtempfänger (24, 240) zum Empfang und zur Leistungsmessung von als Testlicht (22) auf den Testlichtempfänger (24, 240) fallendem Detektionslicht, und
- einer Signalausgabeeinrichtung zur Ausgabe eines mit der Testlichtleistung korrelierten Ausgangssignals,
wobei das Vorsatzmodul (10, 200) getrennt von dem optischen Sensor (12, 120) bzw. dessen eine Sendeeinheit umfassenden Teil ausgeführt und so auf den optischen Sensor bzw. dessen eine Sendeeinheit umfassenden Teil aufsetzbar ist, dass es sich zumindest zu einem vorbestimmten Zeitpunkt im Strahlengang des aus dem optischen Sensor (12, 120) bzw. dessen eine Sendeeinheit umfassenden Teil austretenden, zur Aussendung in den Detektionsbereich bestimmten Detektionslichtes (16, 160) befindet, und
wobei mittels eines im Strahlengang zwischen der Eintrittsöffnung und einer Austrittsöffnung (18) des Vorsatzmoduls (10) angeordneten Teilerspiegels (20, 60) nur ein Teilstrahl aus dem Detektionslicht (16, 160) als Testlicht (22) in Richtung des Testlichtempfängers (24) ausgekoppelt wird, während der nicht durch den Teilerspiegel ausgekoppelte Teil des Detektionslichtes über die Austrittsöffnung (18) des Vorsatzmoduls (10) in den Detektionsbereich (13, 130) gelangt und für die Detektionsfunktion des Sensors (12, 120) zur Verfügung steht, oder
das Vorsatzmodul (200) in einem Teil des Scanbereichs eines als Scanner (120) ausgestalteten optischen Sensors angeordnet ist, der nicht zum Detektionsbereich (130) gehört, so dass das Detektionslicht (160) nur zu einem bestimmten Zeitpunkt während des Scanvorgangs in das Vorsatzmodul (200) eintritt und dort auf den Testlichtempfänger (240) trifft, während es während des restlichen Scanvorgangs in den Detektionsbereich (130) gelangt und für die Detektionsfunktion des Sensors (120) zur Verfügung steht.

2. Kombination nach Anspruch 1, bei der die Signalausgabeeinrichtung zur Erzeugung und Abgabe eines von der gemessenen Leistung des Testlichtes (22) abhängigen Leistungssignales (26, 28) an eine Auswerteeinheit (14) des optischen Sensors (12, 120) ausgestaltet ist.

3. Kombination nach Anspruch 1, bei der das Vorsatzmodul (10, 200) eine Testlichtauswerteeinheit (33) zur Auswertung der mit dem Testlichtempfänger (24) gemessenen Testlichtleistung umfasst, wobei die Signalausgabeeinrichtung zur Abgabe eines Warn- und/oder Stoppsignales (34) in Abhängigkeit der Auswertung der Testlichtauswerteeinheit (33) ausgestaltet ist.

4. Kombination nach einem der Ansprüche 1 bis 3, bei der das Vorsatzmodul (10, 200) eine Befestigungseinrichtung zu seiner Befestigung an dem optischen Sensor (12, 120) oder dessen eine Sendeeinheit umfassenden Teil in einer Weise umfasst, dass es sich zumindest zu dem vorbestimmten Zeitpunkt im Strahlengang des Detektionslichtes (16, 160) befindet.

5. Kombination nach einem der Ansprüche 1 bis 4, bei der das Vorsatzmodul (10, 200) folgendes umfasst:
- die Austrittsöffnung (18) zum Austritt von Detektionslicht (16, 160) aus dem Vorsatzmodul (10) in den Detektionsbereich (13, 130) und
- den Teilerspiegel (20, 60) im Strahlengang zwischen Eintritts- und Austrittsöffnung (18) zum Auskoppeln eines Teilstrahles aus dem Detektionslicht (16, 160) als Testlicht (22) derart, dass das Testlicht (22) zumindest zu einem Zeitpunkt zu dem Testlichtempfänger (24) abgelenkt wird.

6. Kombination nach Anspruch 5, bei der der Teilerspiegel (60) beweglich, insbesondere drehbar ist.

7. Kombination nach einem der Ansprüche 5 oder 6, bei der zumindest die Austrittsöffnung des Vorsatzmoduls (10, 200) ein transparentes Austrittsfenster (18) aufweist.

8. Kombination nach Anspruch 7, bei der das Vorsatzmodul (10, 200) eine Einrichtung (50) zur Überwachung der Fensterverschmutzung des Austrittsfensters (18) umfasst.

9. Kombination nach einem der Ansprüche 7 oder 8, bei der das Austrittsfenster (18) des Vorsatzmoduls (10, 200) nicht senkrecht zum Strahlengang des Detektionslichtes (16, 160) im Vorsatzmodul angeordnet ist.

10. Kombination nach einem der Ansprüche 1 bis 9, bei der das Gehäuse (11) des Vorsatzmoduls (10, 200) derart ausgestaltet ist, dass es zumindest nach Aufsatz auf den optischen Sensor (12, 120) im Wesentlichen abgeschlossen ist.

11. Kombination nach einem der Ansprüche 1 bis 10, insbesondere mit einem als Scanner (120) mit einem Scanbereich ausgestalteten optischen Sensor, bei dem das Vorsatzmodul (10, 200) ausgestaltet ist, derart im Scanbereich des Scanners (120) angeordnet zu werden, dass zu einem Zeitpunkt während eines Scanvorganges zumindest ein Teil des Detektionslichtes (160) durch die Eintrittsöffnung des Vorsatzmodules (10, 200) zum Testlichtempfänger (24, 240) gelangt, wobei sich der Scanbereich des Scanners (120) durch den Raumbereich definiert, der während eines Scanvorganges von dem Detektionslicht (160) überstrichen wird.

12. Verfahren zum Betreiben eines optischen Sensors (12, 120), bei dem
- Detektionslicht (16, 160) in einen Detektionsbereich (13, 130) gesendet wird und aus dem Detektionsbereich (13, 130) zurückreflektiertes oder zurückremittiertes Licht oder durch den Detektionsbereich (13, 130) transmittiertes Licht zur Bildung eines Detektionssignals ausgewertet wird,
- wenigstens ein Teil des Detektionslichtes (16, 160) in einem im Strahlengang des Detektionslichtes (16, 160) angeordneten Vorsatzmodul (10, 200) als Testlicht (22) zu einem Testlichtempfänger (24, 240) geleitet wird, der zum Empfang und zur Leistungsmessung des Testlichtes (22) ausgestaltet ist, und
- von dem Vorsatzmodul (10, 200) ein mit der Testlichtleistung korreliertes Ausgangssignal ausgegeben wird,
wobei das Vorsatzmodul (10, 200) getrennt von dem optischen Sensor (12, 120) bzw. dessen eine Sendeeinheit umfassenden Teil ausgeführt und so auf den optischen Sensor bzw. dessen eine Sendeeinheit umfassenden Teil aufgesetzt wird, dass es sich zumindest zu einem vorbestimmten Zeitpunkt im Strahlengang des aus dem optischen Sensor (12, 120) bzw. dessen eine Sendeeinheit umfassenden Teil austretenden, zur Aussendung in den Detektionsbereich bestimmten Detektionslichtes (16, 160) befindet, und
wobei mittels eines im Strahlengang zwischen der Eintrittsöffnung und einer Austrittsöffnung (18) des Vorsatzmoduls (10) angeordneten Teilerspiegels (20, 60) nur ein Teilstrahl aus dem Detektionslicht (16, 160) als Testlicht (22) in Richtung des Testlichtempfängers (24) ausgekoppelt wird, während der nicht durch den Teilerspiegel ausgekoppelte Teil des Detektionslichtes über die Austrittsöffnung (18) des Vorsatzmoduls (10) in den Detektionsbereich (13, 130) gelangt und für die Detektionsfunktion des Sensors (12, 120) zur Verfügung steht, oder
das Vorsatzmodul (200) in einem Teil des Scanbereichs eines als Scanner (120) ausgestalteten optischen Sensors angeordnet ist, der nicht zum Detektionsbereich (130) gehört, so dass das Detektionslicht (160) nur zu einem bestimmten Zeitpunkt während des Scanvorgangs in das Vorsatzmodul (200) eintritt und dort auf den Testlichtempfänger (240) trifft, während es während des restlichen Scanvorgangs in den Detektionsbereich (130) gelangt und für die Detektionsfunktion des Sensors (120) zur Verfügung steht.

13. Verfahren zum Betreiben eines optischen Sensors (12, 120) nach Anspruch 12, bei dem in dem Vorsatzmodul (10), vorzugsweise mit Hilfe des Teilerspiegels (20, 60), aus dem Detektionslicht (16, 160) ein Teil der Lichtleistung ausgekoppelt wird und der ausgekoppelte Teil (22) zu dem Testlichtempfänger (24) geleitet wird.

14. Verfahren zum Betreiben eines optischen Sensors nach einem der Ansprüche 12 oder 13, wobei der optische Sensor ein Scanner (120) ist und das Vorsatzmodul (10, 200) derart angeordnet ist, dass das Detektionslicht (160) zu einem vorbestimmten Zeitpunkt während eines Scanvorganges durch das Eintrittsfenster in das Vorsatzmodul (200) eintritt und dort auf den Testlichtempfänger (240) fällt.

## Claims

1. A combination of an optical sensor (12, 120) and an attachment module (10, 200) for attaching to the optical sensor (12, 120) or to its part comprising a transmission unit, wherein the optical sensor has a transmission unit for transmitting detection light (16, 160) into a detection zone (13, 130); a receiver for the reception of light reflected back or remitted back from the detection zone (13, 130) or light transmitted through the detection zone (13, 130); and an evaluation unit (14) for evaluating the received light, wherein the attachment module (10, 200) has the following:
- a housing (11) having an inlet opening for the entry of at least some of the detection light (16, 160) into the attachment module (10, 200);
- a test light receiver (24, 240) for the reception and for the power measurement of detection light incident onto the test light receiver (24, 240) as test light (22); and
- a signal output device for outputting an output signal correlated with the test light power,
wherein the attachment module (10, 200) is configured as separate from the optical sensor (12, 120) or from its part comprising a transmission unit and can be attached to the optical sensor or to its part comprising a transmission unit such that it is located at least at a predefined moment in time in the beam path of the detection light (16, 160) exiting the optical sensor (12, 120) or its part comprising a transmission unit and intended for transmission into the detection zone; and
wherein only a part beam of the detection light (16, 160) is decoupled as test light (22) in the direction of the test light receiver (24) by means of a divider mirror (20, 60) arranged in the beam path between the inlet opening and an outlet opening (18) of the attachment module (10), whereas the portion of the detection light not decoupled by the divider mirror moves via the outlet opening (18) of the attachment module (10) into the detection zone (13, 130) and is available for the detection function of the sensor (12, 120); or
wherein the attachment module (200) is arranged in a part of the scan zone of an optical sensor configured as a scanner (120) which does not belong to the detection zone (130) so that the detection light (160) only enters into the attachment module (200) at a specific moment in time during the scan procedure and is there incident onto the test light receiver (240, whereas it moves into the detection zone (130) during the remaining scan procedure and is available for the detection function of the sensor (120).

2. A combination in accordance with claim 1, wherein the signal output device is configured for generating and outputting a power signal (26, 28) depending on the measured power of the test light (22) to an evaluation unit (14) of the optical sensor (12, 120).

3. A combination in accordance with claim 1, wherein the attachment module (10, 200) comprises a test light evaluation unit (33) for evaluating the test light power measured using the test light receiver (24), wherein the signal output device is configured for outputting a warning signal and/or a stop signal (34) in dependence on the evaluation of the test light evaluation unit (33).

4. A combination in accordance with any one of the claims 1 to 3,
wherein the attachment module (10, 200) comprises a fastening device for its fastening to the optical sensor (12, 120) or to its part comprising a transmission unit in a manner such that it is located in the beam path of the detection light (16, 160) at least at the predefined moment in time.

5. A combination in accordance with any one of the claims 1 to 4,
wherein the attachment module (10, 200) comprises the following:
- the outlet opening (18) for the exit of detection light (16, 160) from the attachment module (10) into the detection zone (13, 130); and
- the divider mirror (20, 60) in the beam path between the inlet opening and the outlet opening (18) for decoupling a part beam from the detection light (16, 160) as test light (22) such that the test light (22) is deflected to the test light receiver (24) at least at one moment in time.

6. A combination in accordance with claim 5, wherein the divider mirror (60) is movable, in particular rotatable.

7. A combination in accordance with one of the claims 5 or 6, wherein at least the outlet opening of the attachment module (10, 200) has a transparent outlet window (18).

8. A combination in accordance with claim 7, wherein the attachment module (10, 200) comprises a device (50) for monitoring the window contamination of the outlet window (18).

9. A combination in accordance with one of the claims 7 or 8, wherein the outlet window (18) of the attachment module (10, 200) is not arranged perpendicular to the beam path of the detection light (16, 160) in the attachment module.

10. A combination in accordance with any one of the claims 1 to 9,
wherein the housing (11) of the attachment module (10, 200) is configured such that it is substantially closed at least after the attachment to the optical sensor (12, 120).

11. A combination in accordance with any one of the claims 1 to 10, in particular having an optical sensor configured as a scanner (120) having a scan zone, wherein the attachment module (10, 200) is configured to be arranged in the scan zone of the scanner (120) such that at least some of the detection light (160) moves through the inlet opening of the attachment module (10, 200) to the test light receiver (24, 240) at a moment in time during a scan procedure, with the scan zone of the scanner (120) being defined by the spatial zone which is swept over by the detection light (160) during a scan procedure.

12. A method of operating an optical sensor (12, 120), wherein
- detection light (16, 160) is transmitted into a detection zone (13, 130) and light reflected back or remitted back from the detection zone (13, 130) or light transmitted through the detection zone (13, 130) is evaluated for forming a detection signal;
- at least some of the detection light (16, 160) is conducted in an attachment module (10, 200) arranged in the beam path of the detection light (16, 160) as test light (22) to a test light receiver (24, 240) which is configured for the reception and for the power measurement of the test light (22); and
- an output signal correlated with the test light power is output by the attachment module (10, 200),
wherein the attachment module (10, 200) is configured as separate from the optical sensor (12, 120) or from its part comprising a transmission unit and is attached to the optical sensor or to its part comprising a transmission unit such that it is located, at least at a predefined moment in time, in the beam path of the detection light (16, 160) exiting the optical sensor (12, 120) or its part comprising a transmission unit and intended for transmission into the detection zone; and
wherein only a part beam of the detection light (16, 160) is decoupled as test light (22) in the direction of the test light receiver (24) by means of a divider mirror (20, 60) arranged in the beam path between the inlet opening and an outlet opening (18) of the attachment module (10), whereas the portion of the detection light not decoupled by the divider mirror moves via the outlet opening (18) of the attachment module (10) into the detection zone (13, 130) and is available for the detection function of the sensor (12, 120); or
wherein the attachment module (200) is arranged in a part of the scan zone of an optical sensor configured as a scanner (120) which does not belong to the detection zone (130) so that the detection light (160) only enters into the attachment module (200) at a specific moment in time during the scan procedure and is there incident onto the test light receiver (240), whereas it moves into the detection zone (130) during the remaining scan procedure and is available for the detection function of the sensor (120).

13. A method of operating an optical sensor (12, 120) in accordance with claim 12, wherein some of the light power is decoupled from the detection light (16, 160) in the attachment module (10), preferably with the aid of the divider mirror (20, 60), and the decoupled portion (22) is conducted to the test light receiver (24).

14. A method of operating an optical sensor in accordance with one of the claims 12 or 13, wherein the optical sensor is a scanner (120) and the attachment module (10, 200) is arranged such that the detection light (160) enters into the attachment module (200) through the inlet window at a predefined moment in time during a scan procedure and is there incident onto the test light receiver (240).

## Revendications

1. Combinaison formée d'un capteur optique (12, 120) et d'un module auxiliaire (10, 200) à poser sur le capteur optique (12, 120) ou sur sa partie comprenant une unité émettrice, dans laquelle le capteur optique comprend une unité émettrice pour émettre une lumière de détection (16, 160) dans une zone de détection (13, 130), un récepteur pour recevoir la lumière réfléchie ou réémise en retour depuis la zone de détection (13, 130) ou la lumière transmise à travers la zone de détection (13, 130), et une unité d'évaluation (14) pour évaluer la lumière reçue,
dans laquelle le module auxiliaire (10, 200) comprend les éléments suivants :
- un boîtier (11) avec une ouverture d'entrée pour l'entrée d'au moins une partie de la lumière de détection (16, 130) dans le module auxiliaire (10, 200),
- un récepteur de lumière test (24, 240) pour la réception et la mesure de puissance d'une lumière de détection tombant à titre de lumière test (22) sur le récepteur de lumière test (24, 240), et
- un système de délivrance de signaux pour délivrer un signal de sortie en corrélation avec la puissance de lumière test,
dans laquelle le module auxiliaire (10, 200) est réalisé séparément du capteur optique (12, 120) ou respectivement de sa partie qui inclut une unité émettrice, et peut être ainsi posé sur le capteur optique ou sur sa partie qui inclut une unité émettrice de telle façon qu'il se trouve, au moins à un instant prédéterminé, dans le trajet des rayons de la lumière de détection (16, 160), sortant du capteur optique (12, 120) ou de sa partie qui inclut une unité émettrice, destinés à être émis dans la zone de détection, et
dans laquelle au moyen d'un miroir diviseur (20, 60) agencé dans le trajet des rayons entre l'ouverture d'entrée et une ouverture de sortie (18) du module auxiliaire (10), seul un rayonnement partiel de la lumière de détection (16, 160) est découplé à titre de lumière test (22) en direction du récepteur de lumière test (24), tandis que la partie de la lumière de détection qui n'a pas été découplée par le miroir diviseur parvient, via l'ouverture de sortie (18) du module auxiliaire (10), dans la zone de détection et est disponible pour la fonction de détection du capteur (12, 120), ou
le module auxiliaire (200) est agencé dans une partie de la zone de balayage d'un capteur optique conçu comme un scanner (120), partie qui n'appartient pas à la zone de détection (130), de sorte que la lumière de détection (160) pénètre dans le module auxiliaire (200) uniquement à un instant déterminé pendant le processus de scannage, et tombe dans ce module sur le récepteur de lumière test (240), tandis que pendant le reste du processus de scannage, il parvient dans la zone de détection et est disponible pour la fonction de détection du capteur (120).

2. Combinaison selon la revendication 1, dans laquelle le système de délivrance de signaux est conçu pour engendrer et pour délivrer un signal de puissance (26, 28), dépendant de la puissance mesurée de la lumière test (22), vers une unité d'évaluation (14) du capteur optique (12, 120).

3. Combinaison selon la revendication 1, dans laquelle le module auxiliaire (10, 200) inclut une unité d'évaluation de lumière test (44) pour évaluer la puissance de lumière test mesurée par le récepteur de lumière test (24), et le système de délivrance de signaux est conçu pour délivrer un signal d'avertissement et/ou d'arrêt (34) en fonction de l'évaluation de l'unité d'évaluation de lumière test (33).

4. Combinaison selon l'une des revendications 1 à 3, dans laquelle le module auxiliaire (10, 200) inclut un moyen de fixation pour sa fixation sur le capteur optique (12, 120) ou sur sa partie qui comprend une unité émettrice, de telle manière qu'il se trouve, au moins à l'instant prédéterminé, dans le trajet des rayons de la lumière de détection (16, 160).

5. Combinaison selon l'une des revendications 1 à 4, dans laquelle le module auxiliaire (10, 200) comprend les éléments suivants :
- l'ouverture de sortie (18) pour la sortie de la lumière de détection (16, 160) hors du module auxiliaire (10) jusque dans la zone de détection (13, 130), et
- le miroir diviseur (20) dans le trajet des rayons entre l'ouverture d'entrée et l'ouverture de sortie (18) pour le découplage d'un rayon partiel provenant de la lumière de détection (16, 160) à titre de lumière test (22) de telle façon que la lumière test (22) est déviée au moins à un instant vers le récepteur de lumière test (24).

6. Combinaison selon la revendication 5, dans laquelle le miroir diviseur (20) est mobile, en particulier en rotation.

7. Combinaison selon l'une des revendications 5 ou 6, dans laquelle au moins l'ouverture de sortie du module auxiliaire (10, 200) comporte une fenêtre de sortie transparente (18).

8. Combinaison selon la revendication 7, dans laquelle le module auxiliaire (10, 200) comprend un moyen (50) pour surveiller l'encrassement de la fenêtre de sortie (18).

9. Combinaison selon l'une des revendications 7 ou 8, dans laquelle la fenêtre de sortie (18) du module auxiliaire (10, 200) n'est pas agencée perpendiculairement au trajet des rayons de la fente de détection (16, 160) dans le module auxiliaire.

10. Combinaison selon l'une des revendications 1 à 9, dans laquelle le boîtier (11) du module auxiliaire (10, 200) est conçu de telle façon qu'il est sensiblement refermé au moins après avoir été mis en place sur le capteur optique.

11. Combinaison selon l'une des revendications 1 à 10, en particulier avec un capteur optique conçu sous forme de scanner (120) avec une région de scannage, dans laquelle le module auxiliaire (10, 200) est conçu pour être agencé dans la région de scannage du scanner (120) de telle façon qu'à un instant pendant un processus de scannage au moins une partie de la lumière de détection (160) parvient à travers l'ouverture d'entrée du module auxiliaire (10, 200) au récepteur de lumière test (24, 240), et la région de scannage du scanner (120) se définit par la zone dans l'espace qui est balayée par la lumière de détection (160) pendant un processus de scannage.

12. Procédé pour le fonctionnement d'un capteur optique (12, 120) dans lequel
- une lumière de détection (16, 160) est émise dans une zone de détection (13, 130) et la lumière réfléchie ou réémise en retour depuis la zone de détection (13, 130) ou bien la lumière transmise à travers la zone de détection (13, 130) est évaluée pour former un signal de détection,
- au moins une partie de la lumière de détection (16, 160) est guidée dans un module auxiliaire (10, 200), agencé dans le trajet des rayons de la lumière de détection (16, 160), à titre de lumière test (22) vers un récepteur de lumière test (24, 240) qui est conçu pour la réception et pour la mesure de puissance de la lumière test (22), et
- un signal de sortie en corrélation avec la puissance de la lumière test est délivré par le module auxiliaire (10, 200),
le module auxiliaire (10, 200) est réalisé séparément du capteur optique (12, 120) ou de sa partie incluant une unité émettrice, et peut ainsi être posé sur le capteur optique ou sur sa partie incluant une unité émettrice de telle façon qu'il se trouve, au moins à un instant prédéterminé, dans le trajet des rayons de la lumière de détection (16, 160), sortant du capteur optique (12, 120) ou de sa partie incluant une unité émettrice, destinés à être émis dans la zone de détection (16, 160), et
dans lequel au moyen d'un miroir diviseur (20, 60) agencé dans le trajet des rayons entre l'ouverture d'entrée et une ouverture de sortie (18) du module auxiliaire (10), seul un rayon partiel est découplé depuis la lumière de détection (16, 160) à titre de lumière test (22) en direction du récepteur de lumière test (24), tandis que la partie de la lumière de détection qui n'est pas découplée par le miroir diviseur parvient via l'ouverture de sortie (18) du module auxiliaire (10) dans la zone de détection (13, 130) et est disponible pour la fonction de détection du capteur (12, 120), ou bien
le module auxiliaire (200) est agencé dans une partie de la région de scannage d'un capteur optique conçu sous forme de scanner (120), partie qui n'appartient pas à la zone de détection (130), de sorte que la lumière de détection (160) pénètre dans le module auxiliaire (200) uniquement à un instant déterminé pendant le processus de scannage et tombe dans ce module sur le récepteur de lumière test (240) tandis que pendant le reste du processus de scannage elle parvient dans la zone de détection (130), et est disponible pour la fonction de détection du capteur (120).

13. Procédé pour le fonctionnement d'un capteur optique (12, 120) selon la revendication 12, dans lequel une partie de la puissance lumineuse est découplée hors de la lumière de détection (16, 160) dans le module auxiliaire (10), de préférence avec l'aide du miroir diviseur (20, 60), et la partie découplée (22) est amenée au récepteur de lumière test (24).

14. Procédé pour le fonctionnement d'un capteur optique selon l'une des revendications 12 ou 13, dans lequel le capteur optique est un scanner (120) et le module auxiliaire (10, 200) est agencé de telle façon que la lumière de détection (160) pénètre à un instant prédéterminé pendant un processus de scannage à travers la fenêtre d'entrée dans le module auxiliaire (200) et tombe dans ce module sur le récepteur de lumière test (240).
